# Europäisches Patentamt
## European Patent Office
## Office européen des brevets

(19)

(11) Publication number: **0 109 396**
**B1**

(12)

# EUROPEAN PATENT SPECIFICATION

(45) Date of publication of the patent specification:
**09.04.86**

(51) Int. Cl.⁴: **D 21 D 5/16, D 21 F 1/66**

(21) Application number: **83900206.0**

(22) Date of filing: **23.12.82**

(86) International application number:
**PCT/SE 82/00439**

(87) International publication number:
**WO 83/02292 (07.07.83 Gazette 83/16)**

(54) SCREEN PLATE, SCREW PRESS OR THE LIKE FOR TREATMENT OF A SUSPENSION.

(30) Priority: **23.12.81 SE 8107772**

(43) Date of publication of application:
**30.05.84 Bulletin 84/22**

(45) Publication of the grant of the patent:
**09.04.86 Bulletin 86/15**

(84) Designated Contracting States:
**DE FR GB**

(56) References cited:
**SE - B - 374 400**

**R.M.MASALIMOV, Z.K. IVANEEVA, P.F. MUKHIN, S.P. TITIV, N.A. DYAKOV. "Optimizing the screening of groundwood", Bumazh. Prom., no. 12, December 16, 1980, (Russ.)., PAPERCHEM Accession Nr. 52-07373**

(73) Proprietor: **AB KNUTSILPLATAR, Nima, S-467 00 Grästorp (SE)**

(72) Inventor: **MALM, Karl Gunnar, S-460 50 Grästorp (SE)**

(74) Representative: **Hermansson, Birgitta et al, AB Dahls Patentbyra P.O. Box 19519, S-104 32 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

LIBER, STOCKHOLM 1986

## Description

This invention relates to a screen plate, screw press or the like provided with a plurality of through-flow apertures, and intended for the treatment of a suspension. The invention is as well in respect of a process for producing said screen plate, screw press or the like.

A screen plate of the kind is illustrated by and described in SE-A-374 400 (DE-A-2344084. It has however, proved to be very time consuming and laborious to manufacture screen plates constructed in such a manner that the surface is provided with irregularities, such as depressions, elevations, flutes, or the like, which have a uniform direction in relation to the through-flow apertures of the screen plate all over the surface of the plate. When producing a screen plate of this kind, it is common practice first to produce the apertures, whereafter said irregularities are formed in such a manner that the tool for producing the irregularities is being controlled by the position of the apertures, which are arranged in a regular pattern.

The object of the present invention is to provide a screen plate, screw press or the like of the kind mentioned above, and a method of producing it, which is more easily produced and, consequently, less costconsuming in manufacture in spite of the fact that substantially the same favourable result is attained as with the more cost-consuming screen plates, screw presses or the like of the kind known to the art.

The aim of the invention has been reached by the screen plate, screw press or the like having a surface provided with irregularities all over the surface without any specific positioning relative to the through-flow apertures of said surface.

Extensive comparative tests in practice with the use of a screen plate according to the invention and screen plates manufactured in accordance with said SE-A-374 400 show that extremely satisfactory results are obtained with screen plates according to the invention in spite of the simpler and less cost-consuming way of manufacture.

The irregularities or unevennesses may be provided for in a plurality of ways, manually or automatically, and may be produced by cutting processes and be given the shape of grooves, depressions, recesses, or the like.

The irregularities in question may, as well, be produced by spraying a material onto the surface of the screen plate, screw press or the like giving an uneven or granular surface. Such spraying may be provided for either in such a manner that the sprayed material is deposited regularly over said surface, thus providing the surface with a more or less regular pattern of irregularities, or the material may be sprayed in an irregular pattern over said surface.

In other methods of providing for said irregularities in the surface of the screen plate, screw press or the like, the surface is exposed to heat making possible a plastic deformation of said surface, or the surface may be exposed to a corrosive chemical causing an irregular etching of the surface of. the screen plate, screw press or the like.

After the surface having been provided with irregularities of the kind described above, the through-flow apertures of the screen are produced. Said apertures may be arranged in a regular or irregular pattern over the surface, the mutual arrangement of the apertures and their positioning relative to any specific irregularities in the screen surface being of no significance for the function of the screen according to the invention.

On the other hand, the invention is, of course, not restricted to the method of manufacture in which the apertures are produced after the screen plate having been provided with surface irregularities. However, it is a preferred method to produce the apertures after having produced the surface irregularities.

## Claims:

1. A screen plate, screw press or the like comprising a surface with through-flow apertures for the treatment of a suspension, characterized by the apertured surface being irregular and uneven and that said through-flow apertures are positioned in said surface distributed thereover without any respect to positioning relative to surface irregularities.

2. A screen plate according to claim 1, characterized by said irregularities consisting of furrows on the surface.

3. A screen plate according to claim 1, characterized in that said irregularities constituting granular elevations or recesses in the surface.

4. A method of producing a screen plate, screw press or the like according to claim 1, comprising through-flow apertures and being intended for the treatment of a suspension, characterized in that the apertured surface is provided with surface-irregularities irrespective of the location of said irregularities relative to said apertures

5. A method of producing a screen plate, screw press or the like according to claim 1, comprising through-flow apertures and being intended for the treatment of a suspension characterized in that the surface first is provided with said irregularities, whereafter said apertures are machined through the plate.

6. A method according to claim 4 or claim 5, characterized in that said irregularities in the surface are provided for by cutting machining.

7. A method according to claim 4 or claim 5, characterized in that a material providing for an uneven or granular surface of the screen plate is sprayed over said surface.

8. A method according to claim 4 or claim 5, characterized in that the screen surface is exposed to a heat treatment causing a plastic deformation of the surface.

## Patentansprüche

1. Siebblech, Schraubenpresse o.dgl. enthaltend eine Oberfläche mit Durchlaufsöffnungen für die Behandlung einer Suspension, dadurch gekennzeichnet, dass die mit Öffnungen versehene Oberfläche unregelmässig und uneben ist und dass die Durchlaufsöffnungen in der Oberfläche ohne Rücksicht auf die Lage der in der Oberfläche befindlichen Ungleichmässigkeiten angebracht sind.

2. Siebblech nach Anspruch 1, dadurch gekennzeichnet, dass die Ungleichmässigkeiten Rillen in der Oberfläche sind.

3. Siebblech nach Anspruch 1, dadurch gekennzeichnet, dass die Ungleichmässigkeiten gekörnte Erhöhungen oder Vertiefungen in der Oberfläche sind.

4. Verfahren für die Herstellung eines Siebbleches, einer Schraubenpresse o.dg1. nach Anspruch 1, enthaltend Durchalufsöffnungen und für die Behandlung einer Suspension vorgesehen, dadurch gekennzeichnet, dass die mit Öffnungen versehene Oberfläche mit Oberflächen-Ungleichmässigkeiten ohne Rücksicht auf die i-age der Ungleichmässigkeiten bezüglich der Öffnungen ausgestattet werden.

5. Verfahren für die Herstellung eines Siebbleches, einer Schraubenpresse o.dg1. nach Anspruch 1, enthaltend Durchalufsöffnungen und für die Behandlung einer Suspension vorgesehen, dadurch gekennzeichnet, dass die Oberfläche zuerst mit den Ungleichmässigkeiten ausgestattet wird, wonach die Öffnungen maschinell hergestellt werden.

6. Verfahren nach Anspruch 4 oder 5, dadurch gekennzeichnet, dass die Ungleichmässigkeiten in der Oberfläche mittels spanabhebende Bearbeitung hergestellt werden.

7. Verfahren nach Anspruch 4 oder 5, dadurch gekennzeichnet, dass ein Material, das eine ungleiche oder körnige Oberfläche des Sibbleches bildet über die Oberfläche gespritzt wird.

8. Verfahren nach Anspruch 4 oder 5, dadurch gekennzeichnet, dass die Sieboberfläche eine plastische Deformation hervorrufende Wärmebehandlung unterworfen wird.

## Revendications

1 - Plaque à tamis, presse à vis ou analogue, comprenant une surface munie d'ouvertures d'écoulement pour le traitement d'une suspension, caractérisée en ce que la surface pourvue d'ouvertures est irrégulière et inégale et les ouvertures d'écoulement sont positionnées dans ladite surface sans respect de la position relative des irrégularités de surface.

2 - Plaque à tamis, selon la revendication 1, caractérisée en ce que lesdites irrégularités consistent en des sillons sur la surface.

3 - Plaque à tamis selon la revendication 1, caractérisée en ce que lesdites irrégularités constituent des élévations ou des évidements granulaires sur la surface.

4 - Méthode pour produire une plaque à tamis, une presse à vis ou analogue selon la revendication 1, comprenant des ouvertures d'écoulement et étant destinée au traitement d'une suspension, caractérisée en ce que la surface pourvue d'ouvertures est munie d'irrégularités de surface indépendamment de la situation desdites irrégularités par rapport auxdites ouvertures.

5 - Méthode pour produire une plaque à tamis, une presse à vis ou analogue selon la revendication 1, comprenant des ouvertures d'écoulement et étant destinée au traitement d'une suspension, caractérisée en ce que la surface est d'abord pourvue desdites irrégularités, à la suite de quoi lesdites ouvertures sont usinées à travers la plaque.

6 - Méthode selon la revendication 4 ou 5, caractérisée en ce que lesdites irrégularités dans la surface sont fournies par une opération de coupe.

7 - Méthode selon la revendication 4 ou 5, caractérisée en ce qu'un matériau fournissant une surface inégale ou granulaire est pulvérisé sur ladite surface.

8 - Méthode suivant la revendication 4 ou 5, caractérisée en ce que la surface du tamis est exposée à un traitement par la chaleur provoquant une déformation plastique de la surface.